(19) **Europäisches Patentamt**

**European Patent Office**

**Office européen des brevets**

(11) **EP 1 430 446 B1**

(12) **EUROPEAN PATENT SPECIFICATION**

(45) Date of publication and mention
of the grant of the patent:
**30.08.2006 Bulletin 2006/35**

(51) Int Cl.:
**G06T 7/00** (2006.01)

(21) Application number: **03771301.3**

(22) Date of filing: **24.07.2003**

(86) International application number:
**PCT/JP2003/009373**

(87) International publication number:
**WO 2004/012148 (05.02.2004 Gazette 2004/06)**

(54) **IMAGE PROCESSING METHOD FOR APPEARANCE INSPECTION**

BILDVERARBEITUNGSVERFAHREN FÜR DIE UNTERSUCHUNG DES ERSCHEINUNGSBILDES

PROCEDE DE TRAITEMENT D'IMAGE POUR INSPECTION D'ASPECT

(84) Designated Contracting States:
**DE FR GB IT**

(30) Priority: **26.07.2002 JP 2002218999**

(43) Date of publication of application:
**23.06.2004 Bulletin 2004/26**

(73) Proprietor: **MATSUSHITA ELECTRIC WORKS, LTD.**
**Kadoma-shi, Osaka 571-8686 (JP)**

(72) Inventors:
  • **HASHIMOTO, Yoshihito**
    **Kadoma-shi, Osaka 571-8686 (JP)**
  • **IKEDA, Kazutaka**
    **Kadoma-shi, Osaka 571-8686 (JP)**

(74) Representative: **Appelt, Christian W.**
**FORRESTER & BOEHMERT**
**Anwaltssozietät**
**Pettenkoferstrasse 20-22**
**80336 München (DE)**

(56) References cited:
  • **PERKINS W A: "A MODEL-BASED VISION SYSTEM FOR INDUSTRIAL PARTS" IEEE TRANSACTIONS ON COMPUTERS, IEEE INC. NEW YORK, US, vol. C-27, no. 2, February 1978 (1978-02), pages 126-143, XP001056984 ISSN: 0018-9340**
  • **NGUYEN V-D ET AL: "Exhaustive detection of manufacturing flaws as abnormalities" COMPUTER VISION AND PATTERN RECOGNITION, 1998. PROCEEDINGS. 1998 IEEE COMPUTER SOCIETY CONFERENCE ON SANTA BARBARA, CA, USA 23-25 JUNE 1998, LOS ALAMITOS, CA, USA,IEEE COMPUT. SOC, US, 23 June 1998 (1998-06-23), pages 945-952, XP010291715 ISBN: 0-8186-8497-6**
  • **CLEAVER T G ET AL: "Registration techniques for image subtraction" CONFERENCE PROCEEDINGS ARTICLE, 11 April 1988 (1988-04-11), pages 205-210, XP010075154**
  • **PATENT ABSTRACTS OF JAPAN vol. 2000, no. 23 10 February 2001 & JP 2001 175865 A (MATSUSHITA ELECTRIC WORKS LTD) 29 June 2001**

**EP 1 430 446 B1**

**Description**

TECHNICAL FIELD

The present invention relates to an image processing method for appearance inspection, and more particularly to a method for inspecting an appearance of an object in comparison with a predetermined reference image already prepared as a reference to the object

BACKGROUND ART

Japanese Patent Publication JP 2001-175865 discloses an image processing method for appearance inspection in which an object image is examined in comparison with a reference image to obtain error parameters, i.e., position, rotating angle, and a scale of the object image relative to the reference image. Thus obtained error parameters are then applied to transform the reference image in match with the object image, in order to obtain an area not common to the images. Finally, based upon the value of thus obtained area, it is determined whether or not the object has a defect in appearance such as a flaw, crack, stain or the like.

However, the above scheme of inspecting the object's appearance relying upon the amount of the differentiated area is difficult to compensate for or remove the influence of a possible distortion such as a linear transformation resulting from a relative movement of the object to a camera or a quadratic transformation resulting from a deviation of the object from an optical axis of the camera. With this result, the object might be recognized defective although it is actually not.

In the publication of W.A. Perkins, "A Model-Based Vision System for Industrial Parts", IEEE Transaction on Computers, IEE Inc., New York, US, vol. C-27, no. 2, February 1978, pages 126-143, an image processing method is disclosed which can determine the position and orientation of complex curved objects in grey-level noisy scene. The system organizes and reduces the image data from a digitized picture to a compact representation having the appearance of a line drawing.

T. G. Cleaver and C.-L. Su, "Registration techniques for image subtraction", Proceedings IEEE Southeastcon, 11 - 13 April 1988, Knoxville, TN, USA, pages 205 - 210, discloses registration of edge images obtained from both a reference and a test image. Moments are analysed in order to obtain transform parameters (translation, rotation and scale). The original test image is transformed and subtracted from the original reference image. Registration quality is measured as the sum of absolute values of grey scale differences.

DISCLOSURE OF THE INVENTION

In view of the above concern, the present invention has been achieved to provide a unique method for appearance inspection which is capable of reliably inspecting an object's appearance in well compensation for a possible linear or quadratic deformation, and yet with a reduced computing requirement. According to the image processing method of the present invention, a picture of an object is taken to provide an object image for comparison with a predetermined reference image. Then, the object image is processed for extracting an outline thereof to provide an object outline, in addition to the reference image being processed into a reference outline. Then, it is made to process coordinate data of the object outline and the reference outline in accordance with a least-square error function indicative of a linear or quadratic transformation of the object image, in order to derive error parameters including a position, a rotation angle, and a scale of the object outline relative to the reference outline. Then, the resulting error parameters are applied to transform the reference outline. The above step of updating the error parameters and transforming the reference outline is repeated until the updated error parameters satisfy a predetermined criterion with respect to a linear or quadratic transformation of of the object image. Thereafter, the last updated parameters are applied to transform the reference image into a final reference image. Subsequently, the object image is compared with the final reference image in order to select pixels of the object image each having a grey-scale intensity far from a corresponding pixel of the final reference image by a predetermined value or more. Finally, it is made to analyze thus selected pixels to judge whether the object image is different from the reference image, and to provide a defect signal if the object image is different from the reference image. In this manner, the reference image can be transformed into the final reference image for exact and easy comparison with the object image through a loop of transforming only the reference outline in terms of the updating error parameters. Thus, the transformation into the final reference image can be easily realized with a reduced computing requirement as compared to a case in which the reference image itself is transformed successively. With this result, it is possible to compensate for the linear or quadratic transformation only with a reduced computing capacity, thereby assuring reliable appearance inspection at a reduced hardware requirement.

In a preferred embodiment, a preprocessing is made to prepare the reference image from a standard reference image already prepared for indicating a non-defective object. The picture of the object is examined to determine a frame in which the object appears in rough coincidence with the standard reference image. Then, the object in the frame is compared with the standard reference image to obtain preliminary error parameters including the position, the rotating angle and the scale of the object relative to the standard reference image. Then, the preliminary error parameters are applied to transform the standard reference image into the reference image. As the above preprocessing is free from taking into account the linear or quadratic transformation the reference image can be readily prepared for the subsequent processing of the data in accordance with the least square error function.

It is preferred that each of the object outline and the reference outline is obtained by using the Sobel filter to pick up an edge that follows the pixels having local maximum intensity and having a direction (θ) -45° to +45°, wherein the direction (θ) is expressed by $\theta = \tan^{-1}\left(R/S\right)$, where R is a first derivative of the pixel in x-direction and S is a second derivative of the pixel in y-direction of the image. This is advantageous to eliminate irrelevant lines which might be otherwise recognized to form the outline, thereby improving inspection reliability.

Further, each of the object outline and the reference outline may be obtained through the steps of smoothing each of the object image and the reference image to different degrees in order to give a first smoothed image and a second smoothed image, differentiating the first and second smoothed images to give an array of pixels of different numerical signs, and picking up the pixels each being indicated by one of the numerical signs and at the same time being adjacent to at least one pixel of the other numerical sign, and tracing thus picked up pixels to define the outline.

The method may further include the steps of smoothing the picture to different degrees to provide a first picture and a second picture, differentiating the first and second picture to give an array of pixels of different numerical signs, and picking up the pixels of the same signs to provide an inspection zone only defined by thus picked-up pixels. The object image is compared with the final reference image only at the inspection zone to select pixels within the inspection zone each having a grey-scale intensity far from a corresponding pixel of the final reference image by the predetermined value or more. This is advantageous to eliminate background noises in determination of the defect.

In the present invention, the analysis of the pixels is preferably carried out with reference to a coupling area in which the selected pixels are arranged in an adjacent relation to each other. After determining the coupling area, it is made to calculate a pixel intensity distribution within the coupling area, and to examining geometries of the coupling area. Then, the coupling area is examined so as to classify the defects as one of predetermined kinds of defects according to the pixel intensity distribution and the geometry so that information of thus classified kind is output for confirmation by a human or device for sophisticated control of the object.

These and still other object and advantageous features of the present invention will become more apparent from the following description of a preferred embodiment when taken in conjunction with the attached drawings.

BRIEF DESCRIPTION OF THE DRAWINGS

FIG. 1 is a block diagram illustrating a system realizing an image processing method for appearance inspection in accordance with a preferred embodiment of the present invention;
FIG. 2 is a flow chart illustrating steps of the above processing method;
FIG. 3 illustrates how an object image is compared with a reference image according the above method;
FIG. 4A illustrates the object image in a normal appearance;
FIGS. 4B and 4C illustrate possible object images in linear transformation appearance;
FIGS. 5A and 5B illustrate possible object images in quadratic transformation appearance;
FIG. 6 is a view illustrating a scheme of executing an error function for evaluation of the object image with reference to the reference image;
FIG. 7 illustrates an coupling area utilized for analysis of the object image;
FIG. 8 illustrates a sample reference image for explanation of various possible defects defined in the present invention;
FIGS. 9A to 9D are object images having individual defects; and
FIGS. 10A to 10D illustrate the kinds of the defects determined respectively for the object images of FIGS. 9A to 9D.

BEST MODE FOR CARRYING OUT THE INVENTION

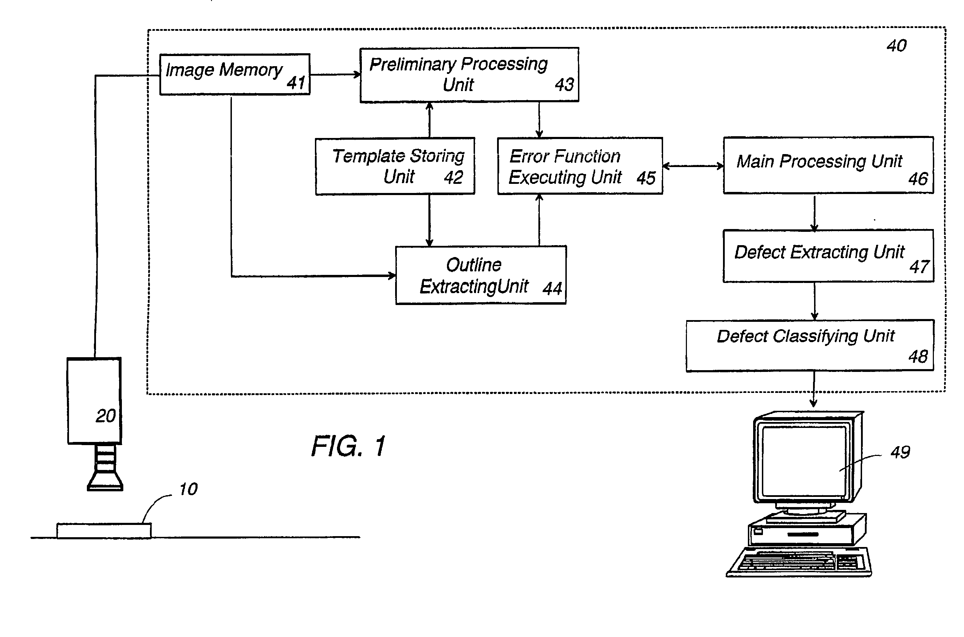

Referring now to FIG. 1, there is shown a system realizing the image processing method for appearance inspection in accordance with a preferred embodiment of the present invention. The system includes a camera **20** and a micro-computer **40** giving various processing units. The camera **20** takes a picture of an object **10** to be inspected and outputs a gray-scale image composed of pixels each having grey-scale intensity digital values and stored in an image memory **41** of the computer. The computer includes a template storing unit **42** storing a standard reference image taken for an original and defect-free object for comparison with an object image extracted from the picture taken by the camera

20.

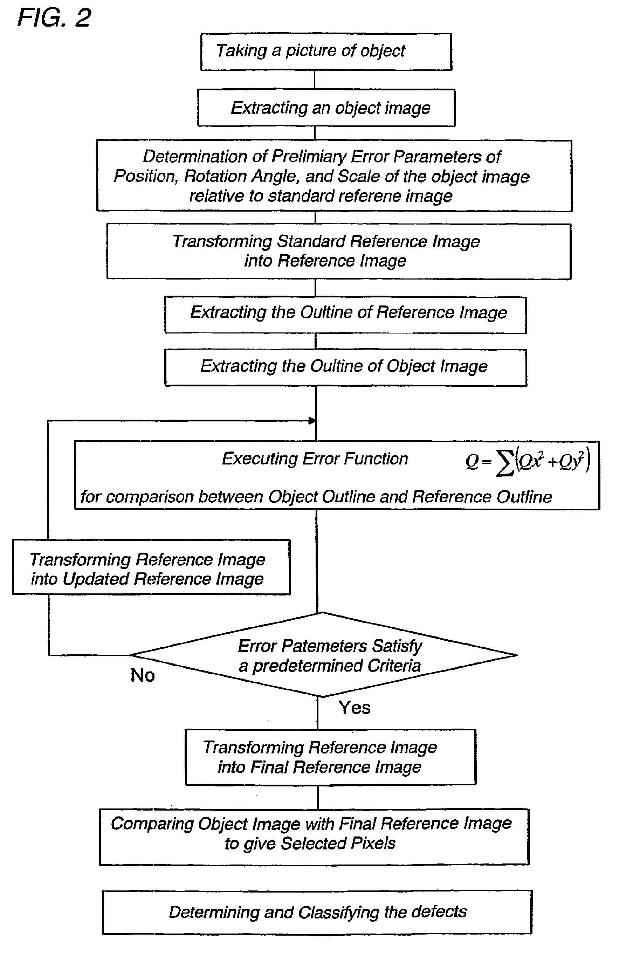

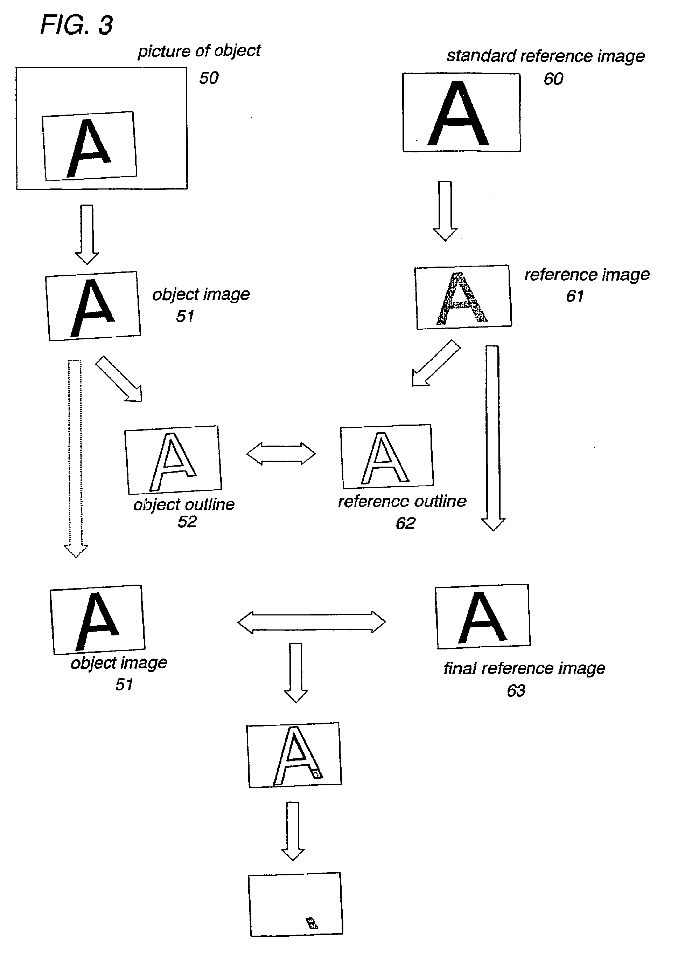

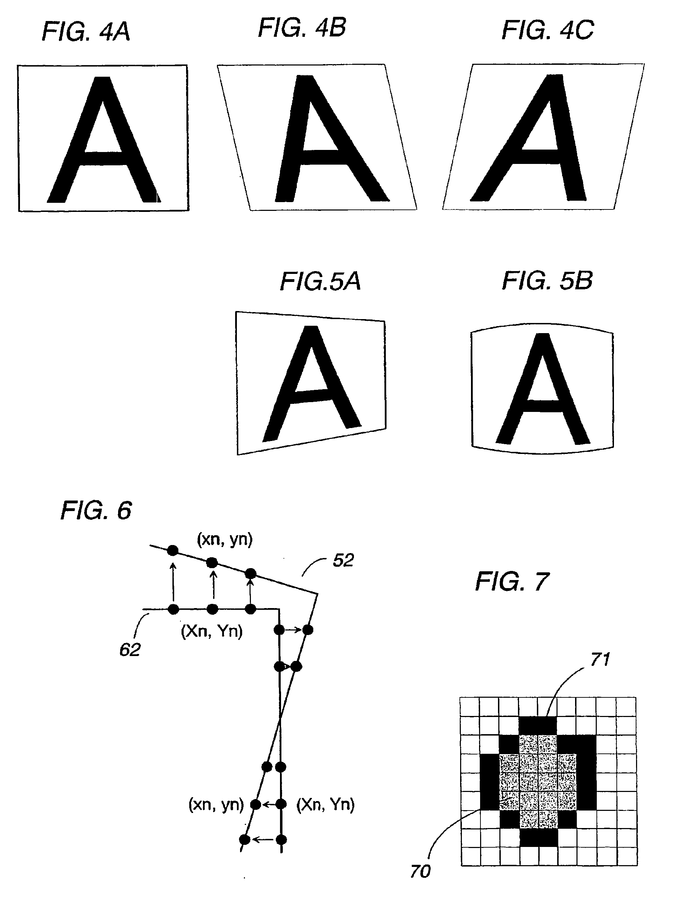

Prior to discussing the details of the system, a brief explanation as to the method of inspecting the object's appearance is made here with reference to FIGS. 2 and 3. After taking the picture of the object, the object image **51** is extracted from the picture **50** with use of the standard reference image **60** to determine preliminary error parameters of a position, a rotating angle, and a scale of the object image relative to the standard reference image **60.** Based upon thus determined preliminary error parameters, the standard reference image **60** is transformed into a reference image **61** in rough coincidence with the object image **51**. Then, it is made to extract outlines from the object image **51** and also from the reference image **61** for providing an object outline **52** and a reference outline **62**, respectively. These outlines **52** and **62** are utilized to obtain a final reference image **63** which takes into account the possible linear deformation or the quadratic deformation of the image, and which is compared with the object image for reliably detecting true defects only. That is, the reference outline **62** is transformed repeatedly until certain criterion is satisfied to eliminate the influence of the linear quadratic or deformation of the image. For instance, the linear deformation of the object image is seen in FIGS. 4B and 4C as a result of relative movement of the object of FIG. 4A to the camera, while the quadratic deformation of the object image is seen in FIG. 5A as a result of a deviation of the object from an optical axis of the camera, and in FIG. 5B as a result of a distortion of a camera lens.

After the reference outline **62** is finally determined to satisfy the criteria, the final reference image **63** is prepared using parameters obtained in a process of transforming the reference outline **62**. Then, the object image **51** is compared with the final reference image **63** to determine whether or not the object image **51** includes one of the predefined defects. When the defect is identified, a corresponding signal is issued to make a suitable action in addition to that a code or like visual information is output to be displayed on a monitor **49**.

For accomplishing the above functions, the system includes a preliminary processing unit **43** which retrieves the standard reference image **60** from the template storing unit **42** and which extracts the object image **51** with the use of the standard reference image in order to transform the standard reference image into the reference image **61** for rough comparison with the object image **51**. The transformation is made based upon a conventional technique such as the generalized Hough transformation or normalized correlation which gives preliminary error parameters of the position, the rotating angle, and the scale of the object image **51** relative to the standard reference image **60**. The resulting error parameters are applied to transform the standard reference image **60** into the reference image **61**.

Thus transformed reference image **61** and the object image **51** are fed to an outline extracting unit **44** which extracts the outline of these images and provides the reference outline **62** and the object outline **52** to an error function executing unit **45**. The error function executing unit **45** executes, under a control of a main processing unit **46**, a least-square error function indicative of a linear transformation of the object outline **52**, in order to obtain error parameters including the position, rotating angle, and scale of the object outline **52** relative to the reference outline **62**. The error function involves the linear relation between the object outline and the reference outline, and is expressed by

$$Q = \sum \left( Qx^2 + Qy^2 \right)$$

where

$$Qx = \alpha n \left( Xn - \left( A \cdot xn + B \cdot yn + C \right) \right) \ ,$$

$$Qy = \alpha n \left( Yn - \left( D \cdot xn + E \cdot yn + F \right) \right) \ ,$$

Xn, Yn are coordinates of points along the outline of reference outline **62,**
xn, yn are coordinates of points along the outline of the object outline **52,** and
αn is a weighting factor.

As shown in FIG. 6, each point (xn, yn) is defined to be a point on the object outline **52** crossed with a line normal to a corresponding point (Xn, Yn) on the reference outline **62**.

Parameters A to F denote the position, rotating angle, and the scale of the object outline relative to the reference outline in terms of the following relations.

$A = B \cos\theta$
$B = -\gamma \sin\phi$
$C = dx$
$D = \beta \sin\theta$
$E = \gamma \cos\phi$
$F = dy$
$\beta$ = scale (%) in x-direction
$\gamma$ = scale (%) in y-direction
$\theta$ = rotation angle (°) of x-axis
$\phi$ = rotation angle (°) of y-axis
dx = movement in x-direction
dy = movement in y-direction

These parameters are computed by solving simultaneous equations resulting from conditions that

$$\partial Q / \partial A = 0, \partial Q / \partial B = 0, \partial Q / \partial C = 0, \partial Q / \partial D = 0, \partial Q / \partial E = 0, \text{and } \partial Q / \partial F = 0.$$

Based upon thus computed parameters, the reference outline 62 is transformed such that the above error function is again executed to obtain fresh parameters. The execution of the error function with the attendant transformation of the reference outline **62** is repeated in a loop until the updated parameters satisfy a predetermined criteria with respect to a linear transformation of the object image. For example, when all or some of the parameters of $\beta$, $\gamma$, $\theta$, $\phi$, dx and dy are found to be less than predetermined values, respectively, the loop is ended as a consequence of that the linear transformation is taken into account, and the parameters are fetched in order to transform the standard reference image or the reference image into the final reference image **63**.

Thus obtained final reference image **63** compensates for possible linear deformation of the object image and is compared with the object image **51** on a pixel-by-pixel basis at a defect extracting unit **47** where it is made to select pixels of the object image **51** each having a grey-scale intensity far from a corresponding pixel of the final reference image **63** by a predetermined value or more. The selected pixels can remove the influence of the possible linear deformation of the object image and be well indicative of defects in the object appearance. The selected pixels are examined at a defect classifying unit **48** which analyzes the selected pixels to determine whether or not the object image includes the defect and classify the defect as one of predetermined kinds. If the defect is identified, a defect signal is issued from the defect classifying unit **48** for use in rejecting the object or at least identifying it as defective. At the same time, a code indicative of the kind of the defect is output to the display **49** for visual confirmation.

Explanation will be made hereinafter for classifying the defect as one of the predetermined kinds which include "flaw", "chip", "fade", and "thin" for a foreground, and "background noise", "fat", "overplus", "blur", and "thick" for a background of the object image. First, it is made to pick up the selected pixels which are adjacent to each other, and define a coupling area **70**. Then, as shown in FIG. 7, the coupling area **70** is processed to extract an outline **71**. The scheme of identifying the defect is made different depending upon which one of the foreground and background is examined.

When examining the foreground, the following four (4) steps are made for classifying the clefect defined by the coupling area **70**.

(1) Examining whether or not the extracted outline **71** includes a portion of the outline of the final reference image **63,** and providing a flag 'Yes' when the extracted outline so includes, and otherwise providing 'No'.
(2) Examining whether or not the included portion of the outline of the reference image **63** is separated into two or more segments, and providing the flag 'Yes' when the outline of the reference image is so separated.
3) Computing a pixel value intensity distribution (dispersion) within the coupling area **70** and checking whether the dispersion is within a predetermined range to see if the coupling area exhibits grey-scale gradation, and providing the flag 'Yes' when the dispersion is within the predetermined range.
4) Computing a length of the outline of the coupling area **70** overlapped with the corresponding outline of the final reference image **63** to determine a ratio of the length of thus overlapped outline to the entire length of the outline of the coupling area, and checking whether the ratio is within a predetermined range to provide a flag 'Yes' when the ratio is within the range.

The results are evaluated to identify the kind of the defect for the coupling area, according to a rule listed in Table 1 below.

Table 1

| Kinds of defects | Steps | | | |
|---|---|---|---|---|
| | (1) | (2) | (3) | (4) |
| Flaw | No | - | - | - |
| Chip | Yes | Yes | No | - |
| | Yes | | No | Yes |
| Fade | Yes | Yes | Yes | - |
| | Yes | - | Yes | Yes |
| Thin | Any other combination | | | |
| (-) either of Yes/No | | | | |

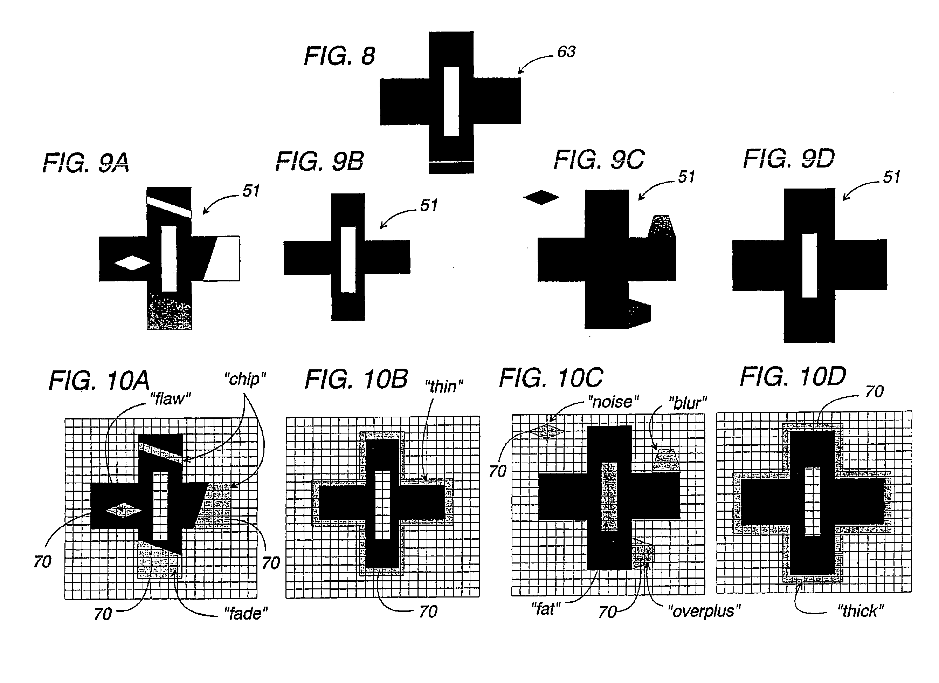

FIGS. 9A and 9B illustrate, for an exemplarily purpose, the above four (4) kinds of the defects that are acknowledged in various possible object images by using the final reference image **63** of FIG. 8. The final reference object image **63** is characterized to have a thick cross with an elongated blank in a vertical segment of the cross.

For the object image of FIG. 9A having various defects in its foreground, the coupling areas 70 are extracted as indicated in FIG. 10A as a result of comparison between the object image **51** and the final reference image **63.** Each coupling area **70** is examined in accordance with the above steps, so as to classify the defects respectively as "flaw", "chip", and "fade", as indicated in the figure.

For the object image of FIG. 9B with the cross being thinned, the coupling area **70** surrounding the cross is selected, as shown in FIG. 10B, to be examined in accordance with the above steps, and is classified as "thin".

When, on the other hand, examining the background of the object image **51,** the following five (5) steps are made for classifying the defect defined by the coupling area **70.**

1) Examining whether or not the extracted outline **71** includes a portion of the outline of the final reference image, and providing a flag 'Yes' when the extracted outline so includes, and otherwise providing 'No'.

2) Examining whether or not the portion of the outline of the reference image is separated into two or more segments, and providing a flag 'Yes' when the included outline of the reference image is so separated.

3) Computing a length of the outline of the final reference image **63** that is included in the coupling area **70** to determine a ratio of thus computed length to the entire length of the outline of the final reference image **63,** and providing the flag 'Yes' when the ratio is within a predetermined range.

4) Computing a pixel value intensity distribution (dispersion) within the coupling area **70** and checking whether the dispersion is within a predetermined range to see if the coupling area exhibits grey-scale gradation, and providing the flag 'Yes' when the dispersion is within the predetermined range.

5) Computing a length of the outline of the coupling area **70** overlapped with the corresponding outline of the final reference image **63** to determine a ratio of the length of thus overlapped outline to the entire length of the outline of the coupling area, and checking whether the ratio is within a predetermined range to provide a flag 'Yes' when the ratio is within the range.

The results are evaluated to identify the kind of the defect for the coupling area in the background, according to a rule listed in Table 2 below.

Table 2

| Kinds of defects | Steps | | | | |
|---|---|---|---|---|---|
| | (1) | (2) | (3) | (4) | (5) |
| Noise | No | - | - | - | - |
| Fat | Yes | Yes | - | - | - |
| Overplus | Yes | No | Yes | No | - |
| | Yes | No | - | No | Yes |

(continued)

| Kinds of defects | Steps | | | | |
|---|---|---|---|---|---|
| | (1) | (2) | (3) | (4) | (5) |
| Blur | Yes | No | Yes | Yes | - |
| | Yes | No | - | Yes | Yes |
| Thick | Any other combination | | | | |
| (-) either of Yes/No | | | | | |

FIGS. 9C and 9D illustrate the above five (5) kinds of the defects acknowledged in various possible object images by using the final reference image of FIG. 8. For the object image of FIG. 9C having various defects in its background, the coupling areas **70** are extracted, as indicated in FIG. 10C, as a result of comparison between the object image **51** and the final reference image **63,** and is then examined in accordance with the above steps, so as to classify the defects respectively as "noise", "fat", "overplus", and "fade", as indicated in the figure.

For the object image of FIG. 9D with the cross being thickened, the coupling area **70** surrounding the cross is selected, as shown in FIG. 10B, and is examined in accordance with the above steps and is classified as "thick".

Instead of using the above error function, it is equally possible to use another error function, as expressed in the below, that represents the quadratic deformation possibly seen in the object image, as explained before with reference to FIGS. 5A and 5B.

$$Q = \sum \left( Qx^2 + Qy^2 \right)$$

where

$$Qx = \alpha n \left( Xn - \left( A \cdot xn^2 + B \cdot xn \cdot yn + C \cdot yn^2 + D \cdot xn + E \cdot yn + F \right) \right) \ ,$$

$$Qy = \alpha n \left( Yn - \left( G \cdot xn^2 + H \cdot xn \cdot yn + I \cdot yn^2 + J \cdot xn + K \cdot yn + L \right) \right)$$

Xn, Yn are coordinates of points along the outline of reference outline **62,**
xn, yn are coordinates of points along the outline of the object outline **52,** and
$\alpha n$ is a weighting factor.

As shown in FIG. 6, each point (xn, yn) is defined to be a point on the object outline **52** crossed with a line normal to a corresponding point (Xn, Yn) on the reference outline **62.**

Parameters A to F denote the position, rotating angle, and the scale of the object outline relative to the reference outline in terms of the following relations.

$D = \beta \cos\theta$
$E = -\gamma \sin\phi$
$F = dx$
$J = \beta \sin\theta$
$K = \gamma \cos\phi$
$L = dy$
$\beta$ = scale (%) in x-direction
$\gamma$ = scale (%) in y-direction
$\theta$ = rotation angle (°) of x-axis
$\phi$ = rotation angle (°) of y-axis

dx = movement in x-direction

dy = movement in y-direction

These parameters are computed by solving simultaneous equations resulting from conditions that $\partial Q/\partial A = 0$, $\partial Q/\partial B = 0$, $\partial Q/\partial C = 0$, $\partial Q/\partial D = 0$, $\partial Q/\partial E = 0$, $\partial Q/\partial F = 0$, $\partial Q/\partial G = 0$, $\partial Q/\partial H = 0$, $\partial Q/\partial I = 0$, $\partial Q/\partial J = 0$, $\partial Q/\partial K = 0$, and $\partial Q/\partial L = 0$.

With the use of thus obtained parameters, the reference outline is transformed until the updated parameters satisfy a predetermined criteria indicative of a quadratic transformation of the object image in a like manner as discussed with reference to the error function indicative of the linear transformation.

When extracting the outlines of the object image as well as the reference image by use of the Sobel filter, it is made to trace an edge that follows the pixels having local maximum intensity and having a direction θ of -45° to +45°, wherein the direction (θ) is expressed by a formula $\theta = \tan^{-1}\left(R/S\right)$, where R is a first derivative of the pixel in x-direction and S is a second derivative of the pixel in y-direction of the image. Thus, the outlines can be extracted correctly.

The present invention should not be limited to the use of the Sobel filter, and could instead utilize another advantageous technique for reliably extracting the outlines with a reduced computing requirement. This technique relies on smoothing of the images and differentiating the smoothed image. First, it is made to smooth each of the object image and the reference image to different degrees in order to give a first smoothed image and a second smoothed image. Then, the smoothed images are differentiated to give an array of pixels of different numeric signs (+/-). Subsequently, it is made to pick up the pixel each being indicated by one of the positive and negative signs and at the same time being adjacent to at least one pixel of the other sign. Finally, the picked up pixels are traced to define the outline for each of the object and reference image. With this result, it is easy to extract the outlines sufficient for determining the final reference image only at a reduced computing load, and therefore at an increased processing speed.

Further, it should be noted that the object image can be successfully extracted from the picture of the object in order to eliminate background noises that are irrelevant to the defect of the object image. The picture **50** is smoothed to different degrees to provide a first picture and a second picture. Then, the first and second pictures are differentiated to give an array of pixels having different numerical signs (+/-) from which the pixels of the same sign are picked up to give an inspection zone only defined by the picked-up pixels. The object image is compared only at the inspection zone with the final reference image to select pixels within the inspection zone each having a grey-scale intensity far from a corresponding pixel of the final reference image by the predetermined value or more. With this technique, it is easy to simplify the computing process for determining the coupling area that is finally analyzed for determination and classification of the defects.

## Claims

1. An image processing method for appearance inspection, said method comprising the steps of:

    a) taking a picture of an object to be inspected to provide an object image (51) for comparison with a reference image (61);
    b) extracting an outline (52) of said object image to give an object outline;
    c) extracting an outline (62) of said reference image to give a reference outline;
    d) processing coordinate data of said object outline (52) and said reference outline (62) in accordance with a least-square error function for deriving error parameters including a position, a rotation angle, and a scale of the object outline relative to said reference outline, and applying the resulting error parameters to transform said reference outline;
    e) repeating the step of d) and transforming the reference outline (62) repeatedly until a predetermined criterion regarding the influence of the linear or quadratic deformation of the object image (51) is satisfied;
    f) applying said error parameters to transform said reference image (61) into a final reference image (63);
    g) comparing said object image (51) with the final reference image (63) to select pixels of said object image each having a grey-scale intensity far from a corresponding pixel of said final reference image by a predetermined value or more, and
    h) analyzing thus selected pixels to judge whether the object image is different from the reference image, and providing a defect signal if the object image is different from the reference image.

2. The method as set forth in claim 1, wherein said reference image is obtained through the steps of:

    using a standard reference image (60) indicating an original object,

examining said picture to determine a frame in which said object appears in rough coincidence with said standard reference image;

comparing the object in said frame with said standard reference image to obtain preliminary error parameters including the position, the rotating angle and the scale of the object in the frame relative to said original reference image,

applying said preliminary error parameters to transform said standard reference image (60) into said reference image (61).

**3.** The method as set forth in claim 1, whereineach of said object outline (52) and said reference outline (62) is obtained by using the Sobel filter to trace an edge that follows the pixels having local maximum intensity and having a direction θ of -45° to +45°, wherein said direction (θ) is expressed by a formula

$$\theta = \tan^{-1}\left(R\middle/S\right),$$

where R is a first derivative of the pixel in x-direction and S is a second derivative of the pixel in y-direction of the image.

**4.** The method as set forth in claim 1, whereineach of said object outline (52) and said reference outline (62) is obtained by the steps of:

smoothing each of said object image and said reference image to different degrees in order to give a first smoothed image and a second smoothed image;

differentiating the first and second smoothed images to give an array of pixels of different numerical signs, picking up the pixels each being indicated by one of numerical signs and at the same time being adjacent to at least one pixel of the other numerical sign, and

tracing thus picked up pixels to define the outline.

**5.** The method as set forth in claim 1, further comprising steps of:

smoothing the picture to different degrees to provide a first picture and a second picture,

differentiating the first and second picture to give an array of pixels of different numerical signs, and

picking up the pixels of the same signs to provide an inspection zone only defined by thus picked-up pixels, said object image being compared with said final reference image only at said inspection zone to select pixels within the inspection zone each having a grey-scale intensity far from a corresponding pixel of said final reference image by the predetermined value or more.

**6.** The method as set forth in claim 1, wherein the step h) of analyzing the pixels comprises the sub-steps of:

defining a coupling area in which the selected pixels are arranged in an adjacent relation to each other,

calculating a pixel intensity distribution within said coupling area,

examining geometry of said coupling area,

examining the coupling area so as to classify the defects as one of predetermined kinds of defects according to the pixel intensity distribution and the geometry of said coupling area,

and outputting the resulting kind of the defect if any.

**Patentansprüche**

**1.** Bildbearbeitungsverfahren für die Untersuchung eines Erscheinungsbildes, wobei das Verfahren die folgenden Schritte umfaßt:

a) Aufnehmen eines Bildes eines zu untersuchenden Objektes, um ein Objektbild (51) für einen Vergleich mit einem Referenzbild (61) bereitzustellen;

b) Herauslösen eines Umrisses (52) des Objektbildes, um einen Objektumriß zu erhalten;

c) Herauslösen eines Umrisses (62) des Referenzbildes, um einen Referenzumriß zu erhalten;

d) Bearbeiten von Koordinatendaten des Objektumrisses (52) und des Referenzumrisses (62) gemäß einer Fehlerfunktion der kleinsten Quadrate zum Herleiten von Fehlerparametem, welche eine Position, einen Drehwinkel und einen Maßstab des Objektumrisses relativ zum Referenzumriß umfassen, und Anwenden der resultierenden Fehlerparameter, um den Referenzumriß zu transformieren;

e) Wiederholen des Schrittes aus d) und wiederholtes Transformieren des Referenzumrisses (62), bis ein vorbestimmtes Kriterium bezüglich des Einflusses der linearen oder der quadratischen Verformung des Objektbildes (51) erfüllt ist;

f) Anwenden der Fehlerparameter, um das Referenzbild (61) in ein finales Referenzbild (63) zu transformieren;

g) Vergleichen des Objektbildes (51) mit dem finalen Referenzbild (63), um Pixel des Objektbildes auszuwählen, von denen jeder eine Grauskalenintensität aufweist, die von einem entsprechenden Pixel des finalen Referenzbildes um einen vorbestimmten Wert oder darüber hinaus abweicht; und

h) Analysieren der solchermaßen ausgewählten Pixel, um zu bewerten, ob sich das Objektbild von dem Referenzbild unterscheidet, und Bereitstellen eines Defektsignals, wenn sich das Objektbild von dem Referenzbild unterscheidet.

2. Verfahren nach Anspruch 1, wobei das Referenzbild durch die folgenden Schritte erhalten wird:

Verwendung eines Standardreferenzbildes (60), welches ein ursprüngliches Objekt zeigt,

Untersuchen des Bildes, um einen Frame zu bestimmen, in dem das Objekt in grober Koinzidenz mit dem Standardreferenzbild erscheint;

Vergleichen des Objekts in dem Frame mit dem Standardreferenzbild, um vorläufige Fehlerparameter zu erhalten, welche die Position, den Drehwinkel und den Maßstab des Objekts in dem Frame relativ zu dem ursprünglichen Referenzbild umfassen;

Anwenden der vorläufigen Fehlerparameter, um das Standardreferenzbild (60) in das Referenzbild (61) zu transformieren.

3. Verfahren nach Anspruch 1, wobei jeder Objektumriß (52) und Referenzumriß (62) mittels des Sobelfilters erhalten wird, um eine Kante zu verfolgen, welche den Pixeln folgt, die eine lokale Maximalintensität aufweisen, und welche eine Richtung θ von - 45° bis +45° aufweisen, wobei die Richtung (θ) durch eine Formel

$$\theta = \tan^{-1}(R/S),$$

ausgedrückt wird, wobei R eine erste Ableitung des Pixels in x-Richtung und S eine zweite Ableitung des Pixels in y-Richtung des Bildes ist.

4. Verfahren nach Anspruch 1, wobei jeder Objektumriß (52) und Referenzumriß (62) durch die folgenden Schritte erhalten wird:

Glätten jedes Objektbildes und Referenzbildes in unterschiedlichen Ausmaßen, um ein erstes geglättetes Bild und ein zweites geglättetes Bild zu erhalten;

Differenzieren des ersten und zweiten geglätteten Bildes, um einen Pixelarray unterschiedlicher numerischer Vorzeichen zu erhalten;

Auswählen der Pixel, die jeweils durch eines der numerischen Vorzeichen angezeigt werden und gleichzeitig neben wenigstens einem Pixel des anderen numerischen Vorzeichens liegen, und

Verfolgen der so ausgewählten Pixel, um den Umriß zu definieren.

5. Verfahren nach Anspruch 1, welches ferner die folgenden Schritte umfaßt:

Glätten des Bildes in unterschiedlichen Ausmaßen, um ein erstes Bild und ein zweites Bild bereitzustellen,

Differenzieren des ersten und zweiten Bildes, um einen Pixelarray unterschiedlicher numerischer Vorzeichen zu erhalten, und

Auswählen der Pixel des gleichen Vorzeichens, um eine Untersuchungszone bereitzustellen, die nur durch derart ausgewählte Pixel definiert wird,

wobei das Objektbild mit dem finalen Referenzbild nur in der Untersuchungszone verglichen wird, um Pixel in der Untersuchungszone auszuwählen, von denen jeder eine Grauskalenintensität aufweist, die von der eines entsprechenden Pixels des finalen Referenzbildes um den vorbestimmten Wert oder darüber hinaus abweicht.

**6.** Verfahren nach Anspruch 1, wobei der Schritt h) des Analysierens der Pixel die folgenden Unterschritte umfaßt:

Definieren eines Kopplungsbereichs, in dem die ausgewählten Pixel in benachbarter Relation zu einander angeordnet sind,
Berechnen einer Pixelintensitätsverteilung in dem Kopplungsbereich,
Untersuchen der Geometrie des Kopplungsbereichs,
Untersuchen des Kopplungsbereichs, um die Defekte nach vorbestimmten Arten von Defekten gemäß der Pixelintensitätsverteilung und der Geometrie des Kopplungsbereichs zu klassifizieren,

und Ausgeben der resultierenden Art des Defekt, falls vorhanden.

**Revendications**

**1.** Procédé de traitement d'image pour inspection d'apparence, ledit procédé comprenant les étapes consistant à:

a) prendre une image d'un objet à inspecter pour fournir une image d'objet (51) pour comparaison avec une image de référence (61);
b) extraire un contour (52) de ladite image d'objet pour donner un contour d'objet;
c) extraire un contour (62) de ladite image de référence pour donner un contour de référence;
d) traiter des données de coordonnées dudit contour d'objet (52) et dudit contour de référence (62) conformément à une fonction d'erreur des moindres carrés pour dérivation de paramètres d'erreur incluant une position, un angle de rotation, et une échelle du contour d'objet relativement au dit contour de référence, et appliquer les paramètres d'erreur résultant pour transformer ledit contour de référence;
e) répéter l'étape de d) et transformer le contour de référence (62) de façon répétée jusqu'à ce qu'un critère prédéterminé concernant l'influence de la déformation linéaire ou quadratique de l'image d'objet (51) soit satisfait;
f) appliquer lesdits paramètres d'erreur pour transformer ladite image de référence (61) en une image de référence finale (63);
g) comparer ladite image d'objet (51) avec l'image de référence finale (63) pour sélectionner des pixels de ladite image d'objet chacun ayant une intensité d'échelle des gris distante d'un pixel correspondant de ladite image de référence finale par une valeur prédéterminée ou plus, et
h) analyser les pixels ainsi sélectionnés pour juger si l'image d'objet est différente de l'image de référence, et fournir un signal de défaut si l'image d'objet est différente de l'image de référence.

**2.** Procédé selon la revendication 1, où ladite image de référence est obtenue à travers les étapes de:

utiliser une image de référence standard (60) indiquant un objet original;
examiner ladite image pour déterminer un cadre dans lequel ledit objet apparaît en coïncidence grossière avec ladite image de référence standard;
comparer l'objet dans ledit cadre avec ladite image de référence standard pour obtenir des paramètres d'erreur préliminaires incluant la position, l'angle de rotation et l'échelle de l'objet dans le cadre relativement à ladite image de référence originale,
appliquer lesdits paramètres d'erreur préliminaires pour transformer ladite image de référence standard (60) en ladite image de référence (61).

**3.** Procédé selon la revendication 1, où chacun dudit contour d'objet (52) et dudit contour de référence (62) est obtenu en utilisant le filtre Sobel pour tracer un bord qui suit les pixels ayant de l'intensité maximale locale et ayant une direction θ de -45° à +45°, où ladite direction (θ) est exprimée par une formule

$$\Theta = \tan^{-1}\left( R/S \right),$$

où R est une première dérivée du pixel dans la direction x et S est une deuxième dérivée du pixel dans la direction y de l'image.

**4.** Procédé selon la revendication 1, où chacun dudit contour d'objet (52) et dudit contour de référence (62) est obtenu par les étapes de:

adoucir chacune de ladite image d'objet et ladite image de référence à différents degrés afin de donner une première image adoucie et une deuxième image adoucie;
différentier les première et deuxième images adoucies pour donner une rangée de pixels de différents signes numériques,
prélever des pixels dont chacun est indiqué par l'un des signes numériques et étant en même temps adjacent à au moins un pixel de l'autre signe numérique, et
tracer des pixels ainsi captés pour définir le contour.

5. Procédé selon la revendication 1, comprenant par ailleurs les étapes consistant à:

adoucir l'image à différents degrés pour fournir une première image et une deuxième image,
différencier la première et deuxième image pour donner une rangée de pixels de différents signes numériques, et
prélever les pixels de même signes pour fournir une zone d'inspection définie seulement par les pixels ainsi prélevés,
ladite image d'objet étant comparée avec ladite image de référence finale seulement au niveau de ladite zone d'inspection pour sélectionner des pixels à l'intérieur de la zone d'inspection chacun ayant une intensité d'échelle des gris distante d'un pixel correspondant de ladite image de référence finale par la valeur prédéterminée ou plus.

6. Procédé selon la revendication 1, où l'étape h) qui consiste à analyser les pixels comprend les sous-étapes consistant à:

définir une région de couplage dans laquelle les pixels sélectionnés sont agencés dans une relation adjacente les uns aux autres,
calculer une distribution d'intensité de pixel à l'intérieur de ladite région de couplage,
examiner la géométrie de ladite région de couplage,
examiner la région de couplage de sorte à classer les défauts comme l'un de types prédéterminés de défauts selon la distribution d'intensité de pixel et la géométrie de ladite région de couplage,
et sortir le type résultant du défaut s'il y a lieu.

*FIG. 1*

## FIG. 2

Taking a picture of object

Extracting an object image

Determination of Prelimiary Error Parameters of
Position, Rotation Angle, and Scale of the object image
relative to standard referene image

Transforming Standard Reference Image
into Reference Image

Extracting the Oultine of Reference Image

Extracting the Oultine of Object Image

Executing Error Function $\quad Q = \sum \left( Qx^2 + Qy^2 \right)$

for comparison between Object Outline and Reference Outline

Transforming Reference Image
into Updated Reference Image

Error Patemeters Satisfy
a predetermined Criteria

No

Yes

Transforming Reference Image
into Final Reference Image

Comparing Object Image with Final Reference Image
to give Selected Pixels

Determining and Classifying the defects

# FIG. 3

picture of object
50

object image
51

standard reference image
60

reference image
61

object outline
52

reference outline
62

object image
51

final reference image
63

## FIG. 4A

## FIG. 4B

## FIG. 4C

## FIG.5A

## FIG. 5B

## FIG. 6

(xn, yn)

52

(Xn, Yn)

62

## FIG. 7

71

70

FIG. 8

63

FIG. 9A

FIG. 9B

FIG. 9C

FIG. 9D

51

51

51

51

FIG. 10A

"flaw"

"chip"

FIG. 10B

"thin"

FIG. 10C

"noise"

"blur"

FIG. 10D

70

70

70

70

70

70

70

"fade"

70

"fat"

70

"overplus"

"thick"

EP 1 430 446 B1